# EUROPÄISCHE PATENTSCHRIFT

(11) **EP 2 900 358 B1**
(45) Veröffentlichungstag und Bekanntmachung des Hinweises auf die Patenterteilung: **08.05.2019**
(21) Anmeldenummer: 13776984.0
(22) Anmeldetag: 26.09.2013
(51) Int. Cl.: B01F 7/04, B01F 15/00, B01F 15/06

(54) **MISCHKNETER ZUR DURCHFÜHRUNG VON MECHANISCHEN, CHEMISCHEN UND/ODER THERMISCHEN PROZESSEN**
MIXING KNEADER FOR IMPLEMENTING MECHANICAL, CHEMICAL AND/OR THERMAL PROCESSES
MÉLANGEUR-PÉTRISSEUR DE MISE EN OEUVRE DES PROCÉDÉS MÉCANIQUES, CHIMIQUES ET/OU THERMIQUES

(30) Priorität: 28.09.2012 DE 102012109259; 09.01.2013 DE 102013100182
(43) Veröffentlichungstag der Anmeldung: 05.08.2015
(73) Patentinhaber: LIST Technology AG, 4422 Arisdorf (CH)
(72) Erfinder: FLEURY, Pierre-Alain, CH-4433 Ramlinsburg (CH); WITTE, Daniel, 79639 Grenzach-Wyhlen (DE); KUNKEL, Roland, 60316 Frankfurt a.M. (DE); KUNZ, Alfred, CH-4132 Muttenz (CH); LIECHTI, Pierre, CH-4132 Muttenz (CH)
(74) Vertreter: Patentanwälte und Rechtsanwalt Weiß, Arat & Partner mbB
(86) Internationale Anmeldenummer: PCT/EP2013/070141
(87) Internationale Veröffentlichungsnummer: WO 2014/049098

(56) Entgegenhaltungen:
- EP-A1- 0 438 772
- EP-A2- 2 181 822
- DE-A1-102006 051 871
- DE-A1-102007 051 923
- DE-C1- 4 208 284
- DE-C1- 4 208 284
- FR-A1- 2 782 937
- FR-A1- 2 782 937
- US-A- 5 275 484
- US-A- 5 275 484
- US-A- 6 109 779
- US-A- 6 109 779

## Beschreibung

Die Erfindung betrifft einen Mischkneter zur Durchführung von mechanischen, chemischen und/oder thermischen Prozessen in einem Produkt, das sich in einem Gehäuse mit Misch- und Putzelementen bzw. Transportelementen an zumindest einer Welle befindet und über diese Elemente von einem Einlass zu einem Austrag transportierbar ist, wobei ein lageveränderbares Wehr einen grossen Teil eines Gehäusequerschnitts verschliesst,

### Stand der Technik

Derartige Vorrichtungen werden auch als Mischkneter bezeichnet. Sie dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxidantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimiden, Thermoplaste, Elastomere, Silikone, Harnstoffharze, Phenolharze, Detergentien und Düngemittel. Zum Beispiel findet sie Anwendung auf Polymerschmelzen nach einer Massepolymerisation auf Derivate der Methacrylsäure.

Stattfinden kann auch eine Polymerisationsreaktion, ebenfalls meist kontinuierlich. Dies wird angewendet auf Polyacrylate, Hydrogele, Polyole, thermoplastische Polymere, Elastomere, syndiotaktisches Polystyrol und Polyacrylamide.

In Mischknetern kann ein Entgasen und/oder Devolatilisieren stattfinden. Angewendet wird dies auf Polymerschmelzen, nach (Co-) Polymerisation von Monomer(en), nach Kondensation von Polyester oder Polyamidschmelzen, auf Spinnlösungen für synthetische Fasern und auf Polymer- oder Elastomergranulate bzw. -pulver im festen Zustand.

Ganz allgemein können im Mischkneter feste, flüssige oder mehrphasige Reaktionen stattfinden. Dies gilt vor allem für Backreaktionen, bei der Behandlung von Flusssäure, Stearaten, Cyaniden, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State-Nachkondensation findet bei der Herstellung bzw. Behandlung von Polyester, Polycarbonaten und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Koagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, Ferrozene, Jod, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Im Wesentlichen werden einwellige und zweiwellige Mischkneter unterschieden. Ein einwelliger Mischkneter ist beispielsweise aus der AT 334 328, der CH 658 798 A5 oder der CH 686 406 A5 bekannt. Dabei ist in einem Gehäuse eine axial verlaufende, mit Scheibenelementen besetzte und um eine Drehachse in einer Drehrichtung drehende Welle angeordnet. Diese bewirkt den Transport des Produktes in Transportrichtung. Zwischen den Scheibenelementen sind Gegenelemente am Gehäuse feststehend angebracht. Die Scheibenelemente sind in Ebenen senkrecht zur Kneterwelle angeordnet und bilden zwischen sich freie Sektoren, welche mit den Ebenen von benachbarten Scheibenelementen Kneträume ausformen.

Eine mehrwellige Misch- und Knetmaschine wird in der CH-A 506 322 beschrieben. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Diese bekannten zweiwelligen Mischkneter haben den Nachteil, dass sie aufgrund des achtförmigen Gehäusequerschnitts im Bereich der Verbindung der beiden Wellengehäuse eine Schwachstelle aufweisen. In diesem Bereich entstehen bei der Verarbeitung zäher Produkte und/oder bei Prozessen, die unter Druck ablaufen, hohe Spannungen, die nur durch aufwendige konstruktive Massnahmen beherrscht werden können.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann, vor allem bei hohem Füllgrad und vor allem, wenn der Füllgrad unkontrolliert gegen 100 % ansteigt. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultieren zum einen ein aufwendiges Herstellungsverfahren und zum zweiten bei einer mechanischen Beanspruchung lokale Spannungsspitzen an der Welle und den Tragelementen, vor allem wenn der Füllgrad gegen 100 % ansteigt. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Die EP 2 181 822 A2 beschreibt einen Extruder, mit dem etwa mittig zwischen einer Mischzone und einer Extrudierzone ein Gehäusequerschnitt verändert werden kann.

Auch die DE 10 2007 051923 A1 beschreibt einen Extruder zur Verarbeitung polymerer Werkstoffe mit einer ersten Schnecke und einer zweiten Schnecke. Erkennbar sind Stifte, durch welche die Durchmischung insbesondere in Abhängigkeit des jeweiligen Werkstoffes optimiert werden kann. Die Stifte können hierzu in ihrer Position veränderbar oder entfernbar sein.

Die DE 10 2006 051871 A1 beschreibt eine Transportvorrichtung für Schüttgut. Dabei sollen Schüttgut und Flüssigkeit miteinander vermischt werden. Der Mischer beinhaltet eine Welle mit Rührwerkzeugen. Ferner umfasst der Mischer nahe beim Auslass eine Wehrscheibe, die schwenkbar gelagert ist. In Abhängigkeit von der Stellung der Wehrscheiben verbleibt das Mischgut im Mischer. Es kann dadurch eine optimale Verweilzeit von Mischgut im Mischer eingestellt werden.

In der EP 0 438 772 A1 wird ein Mischer mit einem Behälter beschrieben, in dem ein Mischwerk angeordnet ist. Vor dem Mischgutauslass ist eine Rückstaueinrichtung in Form eines sogenannten Wehres vorgesehen. Mit dieser Rückstaueinrichtung wird ein bestimmter Füllungsgrad des Behälters, d. h., die Höhe eines Mischgutbettes im Behälter, eingestellt.

Die US 5 275 484 offenbart einen Mischkneter entsprechend dem Oberbegriff des Anspruchs 1.

### Aufgabe

Aufgabe der vorliegenden Erfindung ist es, den Füllgrad des Produktes zwischen Einlass und Austrag besser zu kontrollieren.

### Lösung der Aufgabe

Zur Lösung der Aufgabe führt ein Mischkneter entsprechend Anspruch 1. Die vorliegende Erfindung findet bevorzugt bei zweiwelligen Maschinen Anwendung. Vom Erfindungsgedanken ist aber auch erfasst, dass die Erfindung bei einwelligen oder mehrwelligen Maschinenanwendung findet. Die Füllmenge selbst kann durch Wägezellen kontrolliert werden, die vorliegende Erfindung bezieht sich vor allem auf die Kontrolle des Füllgrades.

Vorgesehen ist hierfür eine Stauplatte, die einen freien Querschnitt des Gehäuses bzw. eines Durchlasses je nach Anforderung des Produktes verengt oder erweitert. Hierdurch kann die Verweilzeit und vor allem der Füllgrad und damit auch der Durchsatz des Produktes durch das Gehäuse verändert werden, wobei natürlich in diesem Zusammenhang auch die Bearbeitung des Produktes beeinflusst wird (z.B. Granulometrie).

Beispielsweise bei der Polymerisation wird ein Monomer in den Mischkneter eingegeben und bearbeitet. Die Eingabe kann in einem flüssigen Aggregatzustand erfolgen. Bei der Bearbeitung geht das Produkt infolge der Verdampfung von Lösungsmittel oder dergleichen in einen viskosen Aggregatzustand über und kann letztendlich sogar granuliert werden. Dabei kann es passieren, dass die viskose bzw. pastöse Phase immer weiter in Richtung Wehr wandert und es dann auch zu einer Blockade des Durchlasses kommen kann. Durch die Einstellung des Wehrs bzw. des Durchlasses kann die räumliche Anordnung dieser pastösen Phase in dem Mischkneter bestimmt und begrenzt werden. Dies dient auch der Sicherheit des Betriebs des Mischkneters. Insbesondere auch bei klebrigen Rezepturen hat sich dieses verstellbarer Wehr als ausserordentlich wertvoll herausgestellt. Hier sind auch wesentlich weniger Vernetzer notwendig.

Erfindungsgemäss befindet sich diese lageveränderbare Stauplatte im Bereich zwischen Gehäuse und Übergang zum Austrag.

Der Stauplatte ist noch ein Wehr zugeordnet, wobei die Stauplatte entlang diesem Wehr geführt ist. Das Wehr selbst verengt natürlich schon den Gehäusequerschnitt, lässt aber noch einen Durchlass für das Produkt offen. Dieser Durchlass kann dann in seinem Querschnitt durch die lageveränderbare Stauplatte verändert werden.

Ein weiterer Gedanke bezieht sich darauf, dass die Wellen nicht nur das Gehäuse selbst durchziehen, sondern auch einen anschliessenden Austrag, wobei auf der Welle auch im Bereich des Austrags zusätzliche Transportelement, die ggf. das Produkt auch nochmals bearbeiten können, vorgesehen sind. In einem bevorzugten Ausführungsbeispiel können dabei Transportelemente vorgesehen werden, die das Produkt nach unten in den Austrag drücken und/oder Elemente, die das Produkt rückfördern. Hierdurch wird eine Verstopfung in dem Austrag mit Sicherheit vermieden.

Ein weiterer Gedanke bezieht sich darauf, dass die Welle selbst in zumindest zwei Temperierzonen aufgeteilt wird, die mit einem Temperiermedium beaufschlagt sind. Dabei kann das Temperiermedium unterschiedlich temperiert sein, so dass in einem Bereich eher ein Aufheizen des Produktes und in einem anderen Bereich eher ein Abkühlen des Produktes erfolgt.

Ferner ist vorgesehen, dass dem Austrag ein eigener Brüdenabzug zugeordnet wird. Dies hat den Vorteil, dass das Produkt im Austrag selbst noch von Brüden umfangen ist, was quasi eine Schmierung des Produktes bewirkt, so dass ein Anhaften an den Wänden des Austrags vermieden wird.

Die Abwesenheit von irgend einem Dom/Stutzen zwischen Einlass und Austrag erlaubt die Möglichkeit, die Maschine mit einem kontrollierten hohen Füllgrad zu fahren. Dies ist vor allem dann wichtig, um mögliche Klumpen zu verkleinern. Diese Fahrweise gilt "Lump free prozess"

### Figurenbeschreibung

Weitere Vorteile, Merkmale und Einzelheiten ergeben sich aus der nachfolgenden Beschreibung bevorzugter Ausführungsbeispiele sowie anhand der Zeichnung; diese zeigt in
**Figur 1** eine schematisch dargestellte Seitenansicht einer Vorrichtung zur Durchführung von mechanischen, chemischen und/oder thermischen Prozessen;
**Figur 2** einen Querschnitt durch die Vorrichtung gemäss Figur 1 entlang Linie II-II;
**Figur 3 bis 5** schematische Darstellungen von weiteren Möglichkeiten der Querschnittsverengung des Gehäuses eines Mischkneters.

Eine Vorrichtung P zur Durchführung von mechanischen, chemischen und/oder thermischen Prozessen weist ein Gehäuse 1 auf, welches einen Einlass 2 für ein zu behandelndes Produkt besitzt. Das Gehäuse 1 kann beheizbar ausgestaltet sein, wofür spezielle Gehäusemäntel 3 mit nicht näher gezeigten Räumen vorgesehen sind, in denen ein Heizmedium geführt wird.

Das Gehäuse selbst ist von zwei Wellen 4, 5 durchzogen, auf denen sich Misch- und Putzelement bzw. Transportelement 6 befinden. Die Welle 4/5 erstreckt sich in Transportrichtung x. In einem bevorzugten Ausführungsbeispiel ist die Welle 4/5 beheizbar ausgestaltet, wobei zwei Temperierzonen gebildet sind, die durch eine Wand 7 in der Welle 4/5 getrennt sind. Auf diese Weise ist es möglich, von beiden Seiten der Welle 4 ein Temperiermedium 8 bzw. 9 in die Welle einzuführen.

An das Gehäuse 1 schliesst ein Austrag 10 an, dem z.B. ein Kühlmantel 11 zugeordnet sein kann. Die Welle 4 erstreckt sich auch durch diesen Austrag 10 und ist dort mit weiteren Transportelementen belegt, wobei Elemente 6.1 und 6.2 vorgesehen sind, die sich von den Elementen 6 unterscheiden. Das Element 6.1 ist mit einem Transportbarren 12.1 versehen, welcher im Gegensatz zu einem Transportbarren 12 der Elemente 6 nicht angestellt ist. Das bedeutet, dass dieser Transportbarren 12.1 bzw. das Element 6.1 dazu geeignet ist, das Produkt nach unten in den Austrag zu drücken.

Ein Transportbarren 12.2 des Elementes 6.2 ist dagegen entgegengesetzt zu dem Transportbarren 12 der Elemente 6 angestellt, so dass er eine Transportrichtung für das Produkt bewirkt, die entgegengesetzt zu der Transportrichtung x der Transportbarren 12 ausgerichtet ist. Die Transportbarren 12.2 gelten als rückfördernde Knetbarren, um die Endplatte zu entlasten.

Im unteren Bereich des Austrags 10 befindet sich noch ein Brüdenabzug 13 zum Zwecke des Abzugs von Brüden und/oder Stickstoff.

Auf den Austrag 10 ist ein beheiztes/kühlbares Schauglas 14 aufgesetzt. Das Schauglas 14, ausgebildet als ein Stutzen, ist eine Option zum Stutzen 13, um die Brüden zurück zu kondensieren (Reflux) oder um die Brüden und/oder den Stickstoff abzuführen.

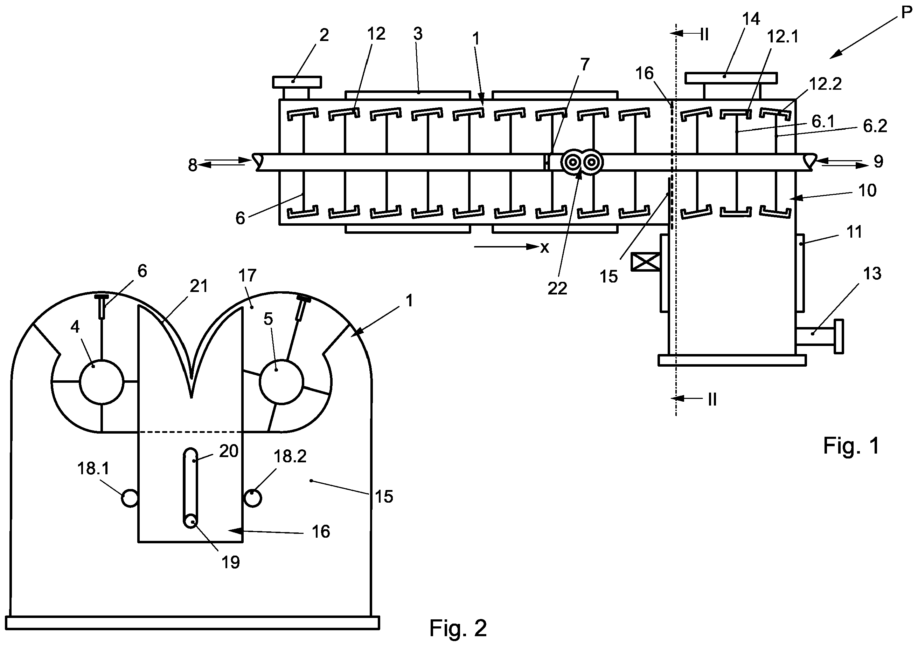

Beim Übergang zwischen Gehäuse 1 und Austrag 10 ist zum einen ein feststehendes Wehr 15 vorgesehen, zum anderen eine in Figur 1 gestrichelt dargestellte Stauplatte 16 vorgesehen. In Figur 2 ist erkennbar, dass das feststehende Wehr 15 einen grossen Teil eines Gehäusequerschnitts verschliesst. Nur im oberen Bereich ist ein Durchlass 17 für das Produkt offengehalten. Aber auch der Querschnitt des Durchlasses 17 kann noch zusätzlich durch die Stauplatte 16 verringert werden, die im gezeigten Ausführungsbeispiel an dem Wehr 15 geführt ist. Geführt wird sie durch seitliche Führungsrollen 18.1 und 18.2 und durch einen Bolzen 19, der in ein Langloch 20 in der Stauplatte 16 eingreift. Gut erkennbar ist, dass zumindest ein Teil 21 der Kontur der Stauplatte 16 der Kontur des Gehäuses 1 angepasst ist.

Seitlich an dem Gehäuse ist ferner eine Eintragsdoppelschnecke (EDS) 22 mit N₂-Spülung angedeutet. Diese dient vor allem dazu, Fines/Pulver einzutragen.

Die Funktionsweise ist folgende:
Ein beliebiges Produkt, bei dem in der Vorrichtung P mechanische, chemische und/oder thermische Prozesse durchgeführt werden sollen, wird in den Einlass 2 eingegeben. Es gelangt dann in den Bereich der Elemente 6 mit den Transportbarren 12, welche das Produkt erfassen und in Transportrichtung x weitertransportieren. Während dem Transport wird das Produkt geknetet, geschert usw. und ggf. gleichzeitig mit Initiatoren, Lösungsmittel, Katalysatoren usw. versetzt.

Im Bereich der ersten Zone der Welle vor der Wand 7 kann das Produkt nicht nur durch das Wärmemedium in dem Gehäusemantel 3, sondern auch durch das Wärmemedium in der Welle zusätzlich aufgeheizt werden. Im zweiten Bereich der Welle erfolgt dann, je nach Wunsch, ein Abkühlen des Produktes, wozu auch ein geringer temperiertes Medium oder Kühlmedium in der Welle 4 und dort in der zweiten Temperierzone beiträgt.

Infolge des Wehrs 15 staut sich das Produkt, so dass in diesem Bereich eine sehr intensive Misch- und Knetwirkung durchgeführt werden kann, bevor das Produkt in den Austrag 10 gelangt. Der freie Durchlass 17 wird entsprechend den Anforderungen des Produktes optimiert, in dem die Stauplatte 16 mehr oder weniger diesen freien Durchlass 17 verringert oder erhöht.

Danach gelangt das Produkt in den Austrag 10 und wird dort von den Elementen 6, 6.1 und 6.2 in den unteren Bereich des Austrags 10 gedrückt, so dass es zu keiner Verstopfung kommt. Bevorzugt ist hierzu auch der Austrag innen mit PTFE beschichtet, so dass das Produkt kaum anhaftet. Auch der erst im Austrag stattfindende Brüdenabzug sorgt für eine bessere Schmierung.

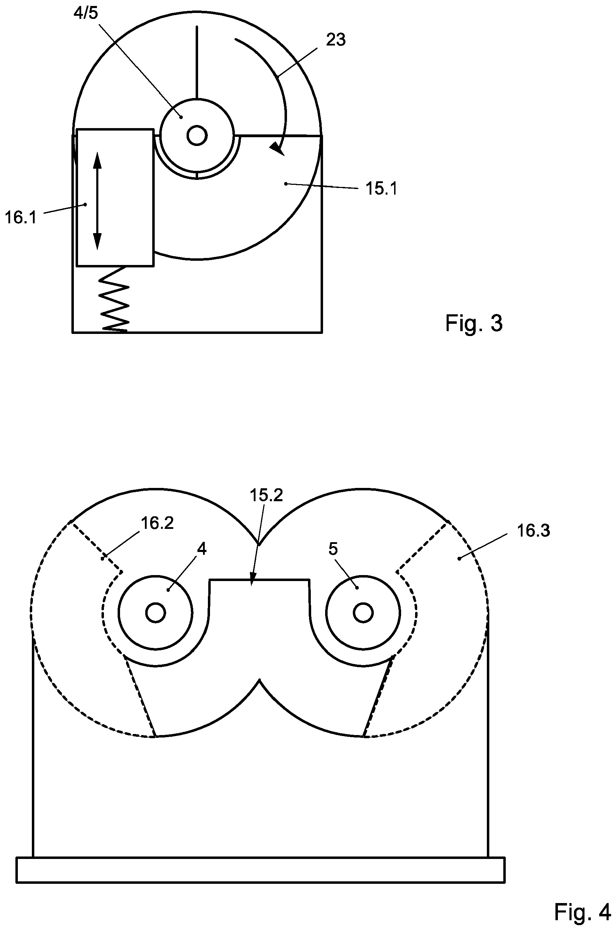

In den Figuren 3 bis 5 sind weitere Möglichkeiten der Veränderung des Gehäusequerschnitts erkennbar. Zum einen deutet Figur 3 an, dass der Erfindungsgedanke nicht nur für zweiwellige Kneter sondern natürlich auch für einwellige Kneter gilt. Sollten mehrere Wellen vorgesehen sein als zwei, so gilt der Erfindungsgedanke selbstverständlich auch für diese Mischkneter.

Gemäss Figur 3 ist durch den Pfeil 23 angedeutet, dass ein Wehr 15.1 auch um die Welle 4/5 herum verstellbar sein kann. Ferner ist in diesem Fall beispielsweise eine Stauplatte 16.1 links neben der Welle 4/5 angeordnet. Diese kann natürlich auch über der Welle 4/5 angeordnet werden. Die aufgezeigten Möglichkeiten sind nur beispielhaft.

Gemäss Figur 4 ist ein weiteres Ausführungsbeispiel eines feststehenden Wehrs 15.2 angedeutet, welches auch teilweise die Wellen 4 bzw. 5 umfängt. Hinter oder vor dem Wehr können bevorzugt um die Wellen 4/5 drehbar angeordnete halbkreisförmige Stauplatten 16.2 bzw. 16.3 vorgesehen werden. Dieses sind gestrichelt angedeutet.

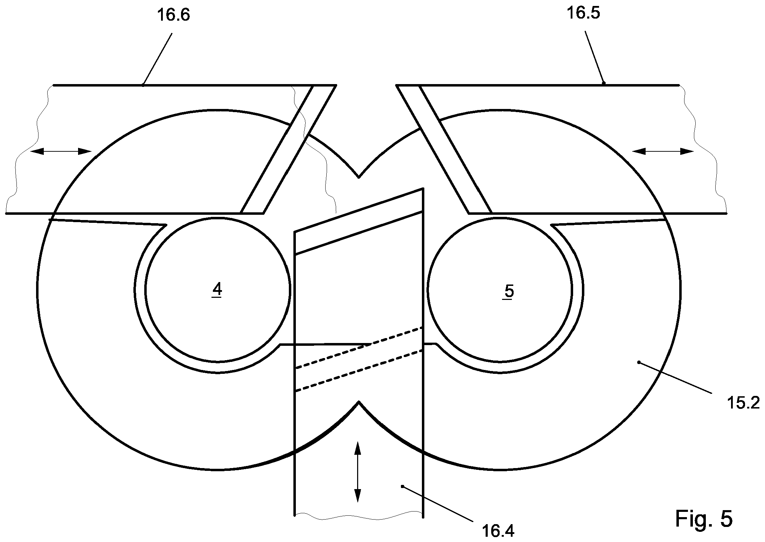

Gemäss Figur 5 ist wiederum ein feststehendes Wehr 15.2 vorgesehen, die übrigen freien Räume des Gehäuses können in ihrem Querschnitt durch verschiedene schwertartige Stauplatten 16.4 bis 16.6 verändert werden.

Die Abwesenheit von irgendeinem Dom/Stutzen zwischen Einlass und Austrag bietet die Möglichkeit, einen kontrollierten hohen Füllgrad zu fahren. Das ist vor allem interessant, um mögliche Klumpen zu zerkleinern. Diese Fahrweise wird auch als "lump free process" bezeichnet.

**Bezugszeichenliste**

| | | | | | |
|---|---|---|---|---|---|
| 1 | Gehäuse | 34 | | 67 | |
| 2 | Einlass | 35 | | 68 | |
| 3 | Gehäusemantel | 36 | | 69 | |
| 4 | Welle | 37 | | 70 | |
| 5 | Welle | 38 | | 71 | |
| 6 | Element | 39 | | 72 | |
| 7 | Wand | 40 | | 73 | |
| 8 | Temperiermedium | 41 | | 74 | |
| 9 | Temperiermedium | 42 | | 75 | |
| 10 | Austrag | 43 | | 76 | |
| 11 | Kühlmantel | 44 | | 77 | |
| 12 | Transportbarren | 45 | | 78 | |
| 13 | Brüdenabzug | 46 | | 79 | |
| 14 | Schauglas/Stutzen | 47 | | | |
| 15 | Wehr | 48 | | | |
| 16 | Stauplatte | 49 | | | |
| 17 | Durchlass | 50 | | | |
| 18 | Führunqsrolle | 51 | | | |
| 19 | Bolzen | 52 | | | |
| 20 | Langloch | 53 | | | |
| 21 | Teil von 16 | 54 | | P | Vorrichtung |
| 22 | Eintragdoppelschnecke | 55 | | | |
| 23 | Pfeil | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | x | Transportrichtung |
| 30 | | 63 | | | |
| 31 | | 64 | | | |
| 32 | | 65 | | | |
| 33 | | 66 | | | |

## Patentansprüche

1. Mischkneter zur Durchführung von mechanischen, chemischen und/oder thermischen Prozessen in einem Produkt, das sich in einem Gehäuse (1) mit Misch- und Putzelementen bzw. Transportelementen (6) an zumindest einer Welle (4, 5) befindet und über diese Elemente (6) von einem Einlass (2) zu einem Austrag (10) transportierbar ist, wobei in dem Gehäuse (1) eine den Querschnitt des Gehäuses verändernde Stauplatte (16-16.6) vorgesehen und dieser ein Wehr (15-15.2) zugeordnet ist, wobei die Stauplatte (16-16.6) am Übergang von Gehäuse (1) und Austrag (10) angeordnet und an dem Wehr (15-15.2) geführt ist, und wobei zumindest ein Teil (21) der Stauplatte (16) dem Querschnitt des Gehäuses (1) angepasst ist; wobei der Mischkneter eingerichtet ist, so dass eine Verstellung der Stauplatte (16-16.6) während des Prozesses erfolgt und durch die Verstellung der Stauplatte (16-16.6) die Knetintensität gesteuert und die Produkt - Granulometrie positiv beeinflusst wird,
**dadurch gekennzeichnet, dass**
das Wehr (15-15.2) ein lageveränderbares Wehr (15.1) ist.

2. Mischkneter nach wenigstens einem der vorhergehenden Ansprüche, **dadurch gekennzeichnet, dass** dem Gehäuse (1) mindestens eine Einrichtung (22) zum Eintragen von Fines/Pulver oder Additive zugeordnet ist.

3. Mischkneter nach Anspruch 2, **dadurch gekennzeichnet, dass** die Einrichtung (22) zum Eintragen von Fines/Pulver eine Monoschnecke oder Eintragdoppelschnecke (EDS) mit N₂ Spülung ist.

4. Mischkneter nach wenigstens einem der vorhergehenden Ansprüche, **dadurch gekennzeichnet, dass** die Stauplatte (16-16.6) von aussen so steuerbar ist, dass sie dem Durchsatz angepasst werden kann.

## Claims

1. Mixing kneader for carrying out mechanical, chemical and/or thermal processes in a product which is located in a housing (1) with mixing and cleaning elements or transport elements (6) on at least one shaft (4, 5) and can be transported via these elements (6) from an inlet (2) to an discharge (10), wherein a baffle plate (16 - 16.6) which changes the cross-section of the housing being provided in the housing (1) and a weir (15 - 15.2) being assigned to the latter, wherein the baffle plate (16 - 16.6) is arranged at the transition between housing (1) and discharge (10) and is guided on the weir (15 - 15.2), and wherein at least a part (21) of the baffle plate (16) is adapted to the cross-section of the housing (1); wherein the mixing kneader is designed so that an adjustment of the baffle plate (16 - 16) takes place during the process and the kneading intensity is controlled by the adjustment of the baffle plate (16 - 16.6) and the product granulometry is positively influenced, **characterized in that** the weir (15 - 15.2) is a weir (15.1) which can be changed in position.

2. Mixing kneader according to at least one of the preceding claims, **characterized in that** the housing (1) is assigned at least one device (22) for introducing fines/powder or additives.

3. Mixing kneader according to claim 2, **characterized in that** the device (22) for introducing fines/powder is a mono-screw or double-screw feeder (EDS) with N2 flushing.

4. Mixing kneader according to at least one of the preceding claims, **characterized in that** the accumulation plate (16 - 16.6) is controllable from the outside in such a way that it can be adapted to the throughput.

## Revendications

1. Malaxeur pour la réalisation de processus mécaniques, chimiques et/ou thermiques dans un produit, qui se trouve dans un boîtier (1) avec des éléments de mélange et de nettoyage ou des éléments de transport (6) sur au moins un arbre (4, 5) et qui peut être transporté par l'intermédiaire de ces éléments (6) d'une entrée (2) vers une sortie (10), moyennant quoi, dans le boîtier (1), est prévue une plaque de retenue (16-16.6) modifiant la section transversale du boîtier, et un déversoir (15-15.2) correspond à celle-ci, la plaque de retenue (16-16.6) étant disposée au niveau de la transition entre le boîtier (1) et la sortie (10) et étant guidée au niveau du déversoir (15-15.2) et au moins une partie (21) de la plaque de retenue (16) étant adaptée à la section transversale du boîtier (1) ; le malaxeur étant conçu de façon à ce qu'un réglage de la plaque de retenue (16-16.6) ait lieu pendant le processus et à ce que le réglage de la plaque de retenue (16-16.6) permette de contrôler l'intensité du malaxage et d'influer positivement sur la granulométrie du produit,
**caractérisé en ce que**
le déversoir (15-15.2) est un déversoir (15.1) mobile.

2. Malaxeur selon au moins l'une des revendications précédentes, **caractérisé en ce que**, au boîtier (1) correspond au moins un dispositif (22) d'introduction de fines/poudres ou d'additifs.

3. Malaxeur selon la revendication 2, **caractérisé en ce que** le dispositif (22) d'introduction de fines/poudres est une vis sans fin ou une double vis sans fin d'alimentation (EDS) avec nettoyage au N₂.

4. Malaxeur selon au moins l'une des revendications précédentes, **caractérisé en ce que** la plaque de retenue (16-16.6) peut être contrôlée de l'extérieur de façon à pouvoir être adaptée au débit.
